# EUROPÄISCHE PATENTSCHRIFT

(11) **EP 2 023 164 B1**
(45) Veröffentlichungstag und Bekanntmachung des Hinweises auf die Patenterteilung: **23.05.2018**
(21) Anmeldenummer: 08012651.9
(22) Anmeldetag: 12.07.2008
(51) Int. Cl.: G01V 8/20

(54) **Optischer Sensor**
Optical sensor
Capteur optique

(30) Priorität: 07.08.2007 DE 202007011016 U
(43) Veröffentlichungstag der Anmeldung: 11.02.2009
(73) Patentinhaber: Leuze electronic GmbH + Co. KG, 73277 Owen/Teck (DE)
(72) Erfinder: Klaiber, Jörg, 71157 Hildrizhausen (DE); Aldiek, Norbert, 73230 Kirchheim/Teck (DE); Bunz, Oliver, 72639 Neuffen (DE)
(74) Vertreter: Ruckh, Rainer Gerhard

(56) Entgegenhaltungen:
- EP-A1- 0 787 974
- WO-A1-99/53345
- DE-A1- 2 656 185
- DE-A1- 3 152 800
- DE-C1- 19 820 358
- DE-U1-202005 012 479

## Beschreibung

Die Erfindung betrifft einen optischen Sensor.

Derartige optische Sensoren können generell als Lichtschranken, Reflexionslichtschranken oder Lichttaster ausgebildet sein, die einen Sendelichtstrahlen emittierenden Sender und einen Empfangslichtstrahlen empfangenden Empfänger aufweisen. Auch können derartige optische Sensoren Mehrfachanordnungen von Sendern und Empfängern aufweisen. Beispiele hierfür sind Lichtgitter. Generell wird bei diesen optischen Sensoren in einer Auswerteeinheit in Abhängigkeit der Ausgangssignale des oder der Empfänger ein Objektfeststellungssignal generiert, welches ausgibt, ob sich ein Objekt im Überwachungsbereich befindet oder nicht.

Um eine geeignete Strahlformung der Sendelichtstrahlen zu erhalten, sind dem Sender Blenden oder als strahlformende Optiken eine oder mehrere Linsen nachgeordnet. Dasselbe gilt für den Empfänger eines optischen Sensors, dem Blenden oder Linsen vorgeordnet sein können. Insbesondere für den Fall, dass neben dem Sender oder Empfänger ein weiteres optoelektronisches Bauteil, also ein weiterer Empfänger oder Sender angeordnet ist, kann in diesen Komponenten ein Tubus mit lichtundurchlässigen Wänden vorgesehen sein um ein optisches Übersprechen zu vermeiden.

Nachteilig bei derartigen, bekannten optischen Sensoren ist, dass die Halterungen für die Sender und Empfänger sowie die zusätzlichen genannten Komponenten separate Einheiten bilden und damit einzeln im optischen Sensor eingebaut werden müssen, was zu unerwünscht hohen Fertigungszeiten bei der Produktion der optischen Sensoren führt.

Ein noch gravierenderer Nachteil ist darin zu sehen, dass diese einzelnen Komponenten separat gefertigt werden müssen und damit prozessabhängig mit unterschiedlichen Einzeltoleranzen behaftet sind. Hierzu kommt, dass die Komponenten einzeln im optischen Sensor fixiert werden müssen und die Einbaupositionen dieser Komponenten selbst toleranzbehaftet sind. Dies führt zu systematischen Ungenauigkeiten bei der Strahlformung und Strahlführung der Sendelichtstrahlen beziehungsweise Empfangslichtstrahlen.

Ein optischer Sensor gemäß dem Oberbegriff des Anspruchs 1 ist aus der DE 31 52 800 A1 bekannt. Dieser optische Sensor ist als Lichtschranke ausgebildet, die wenigstens einen Lichtsender und einen Lichtempfänger umfasst, die einander gegenüberliegend angeordnet sind. Der Lichtempfänger weist ein Gehäuse zur Halterung einer Linse und einer Lochblende auf. Die Lochblende ist in einer einstückig vom Gehäuse ausgehenden Wand angeordnet, an der die Fotodiode anliegt.

Die DE 20 2005 012 479 U1 betrifft einen optischen Sensor mit einem Sendelichtstrahlen emittierenden Sender und einem Empfangslichtstrahlen empfangenden Empfänger. Der Sender ist in einem Kollimator angeordnet, in welchem wenigstens eine Aussparung angeordnet ist, über welche Randstrahlen der vom Sender emittierten Sendelichtstrahlen auf eine außerhalb des Kollimators liegende Monitordiode zur Kontrolle des Sendebetriebs ausgekoppelt sind.

Die DE 26 56 185 A1 betrifft eine Reflexionslichtschranke, mit einem Sender und einem Empfänger, die in Kammern eines Gehäusehohlkörpers eingesetzt sind.

Die EP 0 787 974 A1 betrifft einen Photodetektor mit einem Gehäuse, in welchem ein Sender, ein Empfänger und diesen Elementen zugeordnete Linsen gelagert sind.

Ein entsprechender Sensor ist aus der WO 99/53345 A1 bekannt.

Die DE 198 20 358 C1 betrifft einen optoelektronischen Sensor mit einem in einem Gehäuse integrierten Sender und/oder Empfänger. Zur Aufnahme von elektronischen Bauteilen ist eine flexible Leiterplatte vorgesehen. Auf der flexiblen Leiterplatte sitzt wenigstens eine starre Leiterplatte auf, wobei diese Leiterplatten über Lötstellen verbunden sind.

Der Erfindung liegt die Aufgabe zugrunde, einen optischen Sensor der eingangs genannten Art bereitzustellen, welcher kostengünstig herstellbar ist und dabei reproduzierbare definierte optische Eigenschaften aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Erfassung von Objekten in einem Überwachungsbereich und weist einen Sendelichtstrahlen emittierenden Sender und einen Empfangslichtstrahlen empfangenden Empfänger auf. Der Sender und/oder Empfänger ist jeweils in einem einstückig ausgebildeten Blendentubus gelagert. Erste Teile des Blendentubus bilden eine Lichtfalle und weitere Teile sind zur Lagerung einer Optik und/oder zur Ausbildung einer Blende vorgesehen. Der oder jeder Blendentubus weist eine Aufnahme für den Sender oder den Empfänger auf, die eine am rückseitigen Ende des Blendentubus ausmündende Öffnung aufweist. Der Sender oder Empfänger ist in der Aufnahme einrastbar oder dort mittels Verdrängungsrippen fixierbar. Eine Lichtfalle bildet das frontseitige Ende des Blendentubus. Die Lichtfalle besteht aus einer diskreten Anordnung von Lichtfallenelementen, wobei diese koaxial zur Aufnahme für den Sender oder Empfänger angeordnet sind.

Mit dem erfindungsgemäßen Blendentubus wird einerseits eine kostengünstige Herstellung des optischen Sensors ermöglicht. Andererseits werden durch den Einsatz des Blendentubus definierte, reproduzierbare optische Eigenschaften des optischen Sensors erhalten, was zu einer erhöhten Nachweissicherheit des optischen Sensors führt.

In dem einstückig ausgebildeten Blendentubus wird nicht nur der Sender oder Empfänger als optoelektronisches Bauteil gelagert. Vielmehr bildet der Blendentubus eine Lichtfalle, der im Fall eines eingebauten Senders den Strahlquerschnitt der Sendelichtstrahlen definiert begrenzt und im Fall eines eingebauten Empfängers das Sichtfeld, innerhalb dessen Empfangslichtstrahlen auf den Empfänger geführt werden, definiert.

Weiterhin werden zusätzliche Optikelemente, die dem Sender oder Empfänger zugeordnet werden müssen, im Blendentubus selbst integriert oder in diesem gelagert. Ein derartiges Optikelement kann einerseits eine Blende für die Sendelichtstrahlen beziehungsweise Empfangslichtstrahlen sein, wobei diese Blende unmittelbar im Blendentubus integriert sein kann, das heißt Bestandteil des Blendentubus sein kann. Weiterhin kann eine Optik in Form einer Linse oder dergleichen, welche zur Strahlformung der Sendelichtstrahlen beziehungsweise Empfangslichtstrahlen benötigt wird, direkt im Blendentubus selbst gelagert werden.

Damit entfallen zur Ausbildung beziehungsweise Lagefixierung der vorgenannten Komponenten separate, mit unterschiedlichen Einzeltoleranzen behaftete Einheiten sowie mit entsprechenden Ungenauigkeiten behaftete Ausrichtungsvorgänge derartiger Einheiten.

Durch die Mehrfachfunktion des einstückig ausgebildeten Blendentubus wird zudem die Teilezahl der Komponenten reduziert und damit auch dessen Montagezeit.

Der Blendentubus ist dabei insbesondere als Kunststoff-Spritzgussteil ausgebildet, das mit einem hinterschnittfreien Werkzeug kostengünstig und toleranzarm gefertigt werden kann.

Erfindungsgemäß besteht die Lichtfalle des Blendentubus aus einer diskreten Anordnung von Lichtfallenelementen. An den diskreten Lichtfallenelementen werden die Randstrahlbereiche der Sendelichtstrahlen beziehungsweise Empfangslichtstrahlen reflektiert, wodurch für diese eine definierte, reproduzierbare Strahlformung erhalten wird. Im Gegensatz zu einem bekannten Tubus mit massiven Seitenwänden erfolgt an den diskreten Lichtfallenelementen nahezu keine undefinierte Aufstreuung der Sendelichtstrahlen oder Empfangslichtstrahlen, wodurch eine genaue, reproduzierbare Strahlformung möglich wird.

Gemäß einer weiteren vorteilhaften Ausgestaltung sind am Blendentubus Rastmittel vorgesehen, wobei die Rastmittel Bestandteil des Blendentubus sind, das heißt einstückig mit diesem ausgebildet sind. Mittels der Rastmittel kann der Blendentubus auf einer Leiterplatte fixiert werden. Dabei ist der Sender oder Empfänger im Blendentubus so gelagert, dass dieser bei Aufrasten des Blendentubus auf der Leiterplatte mit den Anschlüssen der Leiterplatte kontaktiert wird. Damit wird in einem Arbeitsgang die Fixierung des Blendentubus an der Leiterplatte sowie die Kontaktierung des Senders oder Empfängers an dieser Leiterplatte vorgenommen. Dies führt zu einer weiteren Reduzierung der Fertigungszeiten für den optischen Sensor.

Die Erfindung wird im Nachstehenden anhand der Zeichnungen erläutert. Es zeigen:
- Figur 1:: Schematische Darstellung eines als Lichttaster ausgebildeten optischen Sensor.
- Figur 2:: Schematische Darstellung eines als Lichtgitter ausgebildeten optischen Sensor.
- Figur 3:: Erste perspektivische Ansicht eines Blendentubus für einen optischen Sensor.
- Figur 4:: Zweite perspektivische Ansicht eines Blendentubus für einen optischen Sensor.
- Figur 5:: Erste perspektivische Ansicht des Blendentubus gemäß den Figuren 3 und 4 auf einer Leiterplatte.
- Figur 6:: Zweite perspektivische Ansicht des Blendentubus gemäß den Figuren 3 und 4 auf einer Leiterplatte.

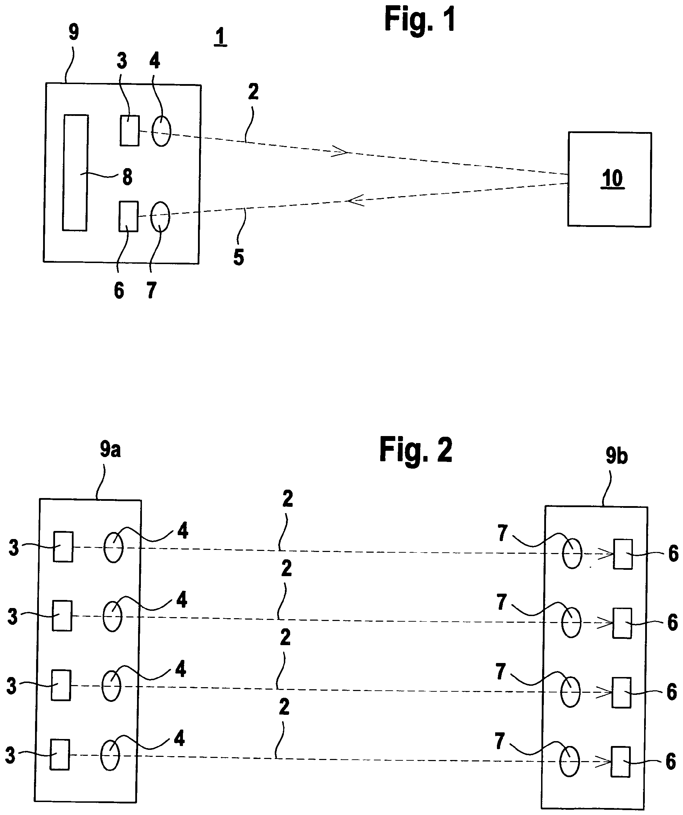

Figur 1 zeigt schematisch die wesentlichen Komponenten eines als Lichttaster ausgebildeten optischen Sensors 1. Der Lichttaster weist einen Sendelichtstrahlen 2 emittierenden Sender 3 mit nachgeordneter Sendeoptik 4 sowie einen Empfangslichtstrahlen 5 empfangenden Empfänger 6 mit zugeordneter Empfangsoptik 7 auf. Weiterhin ist eine Auswerteeinheit 8 in Form eines Mikroprozessors zur Ansteuerung des Senders 3 sowie zur Auswertung der am Ausgang des Empfängers 6 anstehenden Empfangssignale vorgesehen. Die Komponenten des Lichttasters sind in einem Gehäuse 9 integriert. Bei Detektion eines Objekts 10 in einem Überwachungsbereich werden die vom Sender 3 emittierten Sendelichtstrahlen 2 zum Objekt 10 geführt und von dort als Empfangslichtstrahlen 5 zum Empfänger 6 reflektiert. Die dadurch generierten Empfangssignale am Ausgang des Empfängers 6 werden durch eine Schwellwertbewertung ausgewertet, wodurch ein binäres Schaltsignal generiert wird, dessen Schaltzustände angeben, ob sich ein Objekt 10 im Überwachungsbereich befindet oder nicht.

Figur 2 zeigt die optischen Komponenten eines als Lichtgitter ausgebildeten optischen Sensors 1. Das Lichtgitter weist eine Reihenanordnung von Sendelichtstrahlen 2 emittierenden Sendern 3 auf, wobei jedem Sender 3 eine Sendeoptik 4 nachgeordnet ist. Die Sender 3 mit den Sendeoptiken 4 sind in einem ersten Gehäuse 9a integriert. Weiterhin weist das Lichtgitter eine Reihenanordnung von Empfängern 6 auf, welchen jeweils eine Empfangsoptik 7 vorgeordnet ist. Die Empfänger 6 und die Empfangsoptiken 7 sind in einem zweiten Gehäuse 9b integriert. Das Lichtgitter arbeitet nach dem Lichtschrankenprinzip. Bei freiem Strahlengang treffen die Sendelichtstrahlen 2 der Sender 3 ungehindert auf den jeweils zugeordneten Empfänger 6. Dies ist in Figur 2 dargestellt. Dringt ein Objekt 10 in den Überwachungsbereich ein, so werden die Sendelichtstrahlen 2 wenigstens eines Senders 3 unterbrochen, so dass diese nicht mehr zum zugeordneten Empfänger 6 gelangen. Die dabei erhaltenen Empfangssignale werden in der in Figur 2 nicht dargestellten Auswerteeinheit 8 zur Generierung des Objektfeststellungssignals ausgewertet.

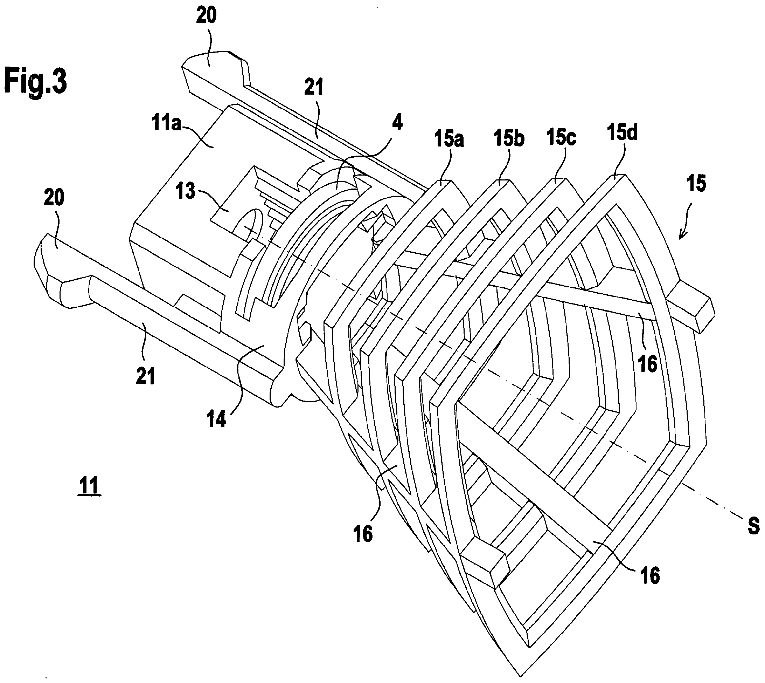

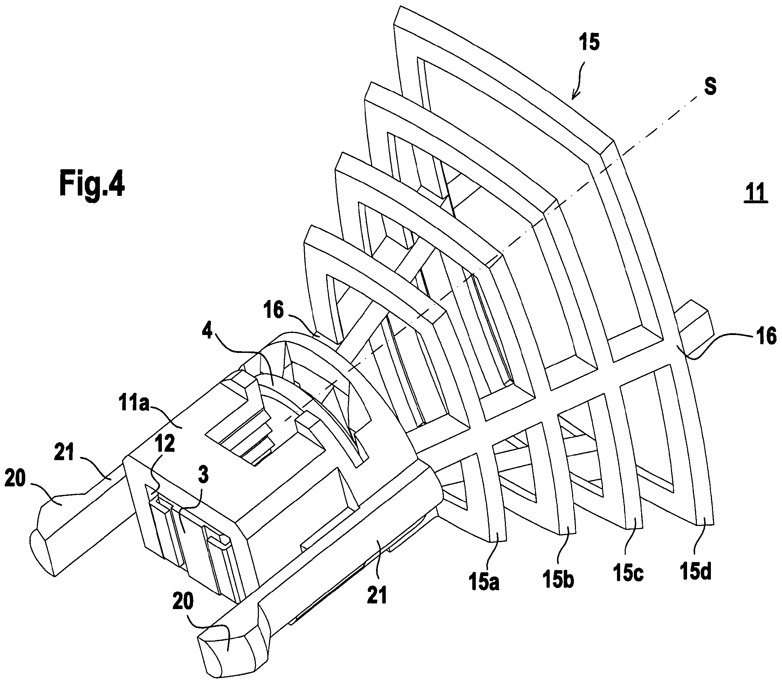

Die Sender 3 des optischen Sensors 1 und vorzugsweise auch die Empfänger 6 des optischen Sensors 1 gemäß Figur 1 oder Figur 2 sind jeweils in einem Blendentubus 11 integriert, der in den Figuren 3 und 4 jeweils in einer Einzeldarstellung dargestellt ist.

Bei dem Beispiel gemäß den Figuren 3 und 4 ist ein Sender 2 im Blendentubus 11 integriert.

Der Blendentubus 11 besteht aus einem Kunststoff-Spritzgussteil, welches mittels eines hinterschnittfreien Werkzeugs hergestellt ist. Der rückseitige Teil des Blendentubus 11 ist in Form einer gehäuseförmigen Kapselung 11a ausgebildet, wobei an der Rückseite dieser Kapselung 11a eine Öffnung 12 vorgesehen ist. Über diese Öffnung 12 kann der Sender 3 in eine Aufnahme in der gehäuseförmigen Kapselung 11a eingeschoben und dort durch Rastmittel oder mittels Verdrängungsrippen fixiert werden. In Figur 4 ist der rückseitige Teil des in der Aufnahme gehaltenen Senders 3 in der Öffnung 12 freiliegend erkennbar.

Die optische Achse des in der Aufnahme des Blendentubus 11 fixierten Senders 2 ist in den Figuren 3 und 4 mit S bezeichnet. Die optische Achse fällt mit der eine Symmetrieachse bildenden Längsachse des Blendentubus 11 zusammen.

In Strahlrichtung der vom Sender 3 emittierten Sendelichtstrahlen 2, das heißt in Richtung der Vorderseite des Blendentubus 11 schließt eine in der gehäuseförmigen Kapselung 11a eingearbeitete Blende 13 in Form einer kreisförmigen Lochblende an, wie aus Figur 3 ersichtlich ist. Die Blende 13 ist Bestandteil des Blendentubus 11. Die Sendelichtstrahlen 2 des in der Aufnahme gelagerten Senders 3 werden durch diese Blende 13 geführt.

Der Blende 13 ist eine Halterung 14 vorgeordnet, in welche, wie aus den Figuren 3 und 4 ersichtlich, eine Sendeoptik 4 in Form einer Linse eingesetzt ist. Die Halterung 14 ist an die rotationssymmetrische Form der Linse angepasst. Dementsprechend weist die Halterung 14 einen ringförmigen Aufbau auf. Dabei ist die Halterung 14 an der Oberseite offen, so dass dort die Linse in die Halterung 14 eingeschoben werden kann. In der Halterung 14 ist die Linse mittels nicht dargestellten Rastmitteln oder Verdrängungsrippen lagefixiert. Auch diese Halterung 14 ist Bestandteil des Blendentubus 11.

An diese Halterung 14 schließt eine Lichtfalle 15 als Vorderteil des Blendentubus 11 an. Die Lichtfalle 15 dient zur Begrenzung des Strahlquerschnitts der vom Sender 3 emittierten und über die Blende 13 und die Sendeoptik 4 geführten Sendelichtstrahlen 2.

Die Lichtfalle 15 weist eine konische Form auf, das heißt deren Querschnitt verbreitert sich zu ihrem vorderen Rand hin kontinuierlich.

Die Lichtfalle 15 besteht im vorliegenden Fall aus einer diskreten Anordnung von vier Lichtfallenelementen 15a-d. Die einzelnen Lichtfallenelemente 15a-d weisen jeweils die Form von im Wesentlichen rechteckigen Rahmen auf, wobei die vier einen Rahmen bildenden Balkenelemente zur Mitte hin etwas nach außen gewölbt sind. Ausgehend vom ersten Lichtfallenelement 15a, das an die Halterung 14 anschließt bis zum letzten, frontseitigen Lichtfallenelement 15d vergrößern sich die Querschnitte der Lichtfallenelemente 15a-d kontinuierlich. Jedes Lichtfallenelement 15a-d ist in einer senkrecht zur Symmetrieachse des Blendentubus 11 orientierten Ebene angeordnet. Dabei sind die Lichtfallenelemente 15a-d koaxial zur Symmetrieachse des Blendentubus 11 angeordnet. Die Lichtfallenelemente 15a-d sind zueinander in äquidistanten Abständen angeordnet und über in Längsrichtung des Blendentubus 11 verlaufende Stege 16 verbunden.

Die Größendifferenz zweier aufeinanderfolgenden Lichtfallenelemente 15a-d ist so gewählt, dass bei Projektion des kleineren Rahmens auf die Ebene des folgenden größeren Rahmen ein Teil der Rahmenfläche des kleineren Rahmens noch auf den größeren Rahmen projiziert wird. Die senkrecht zur Symmetrieachse orientierten Seitenflächen zweier aufeinanderfolgenden Rahmen bilden somit zueinander hinterschnittene Flächen. Diese hinterschnittenen Flächen der Lichtfallenelemente 15a-d können mit dem hinterschnittfreien Werkzeug zur Herstellung des Blendentubus 11 deshalb gefertigt werden, weil die einzelnen Lichtfallenelemente 15a-d in Abstand zueinander angeordnet sind.

Die Lichtfallenelemente 15a-d der Lichtfalle 15 bewirken eine definierte Begrenzung des Strahlquerschnitts der Sendelichtstrahlen 2. Dieser Effekt wird dadurch erzielt, dass die Randbereiche der vom Sender 3 emittierten Sendelichtstrahlen 2 an den diesem zugewandten Flächen der Lichtfallenelemente 15a-d reflektiert werden. Im Gegensatz zu einem bekannten Tubus mit massiven Seitenwänden, werden die auf die Lichtfallenelemente 15a-d treffenden Sendelichtstrahlen 2 wegreflektiert und nicht in den Strahlengang der die Lichtfalle 15 durchsetzenden Sendelichtstrahlen 2 zurückgestreut. Bei einem herkömmlichen Tubus mit massiven Seitenwänden erfolgt dagegen eine unkontrollierte Rückstreuung der Sendelichtstrahlen 2 an den Innenseiten dieser Seitenwände.

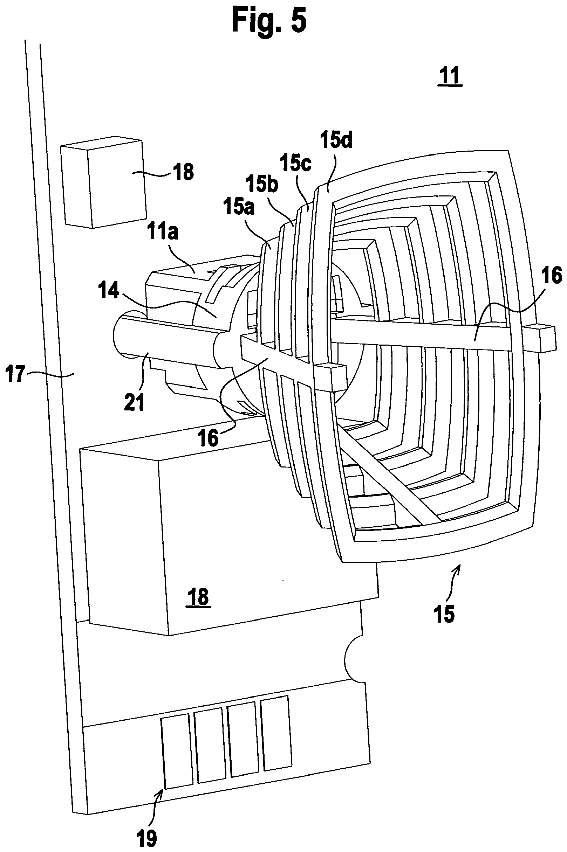

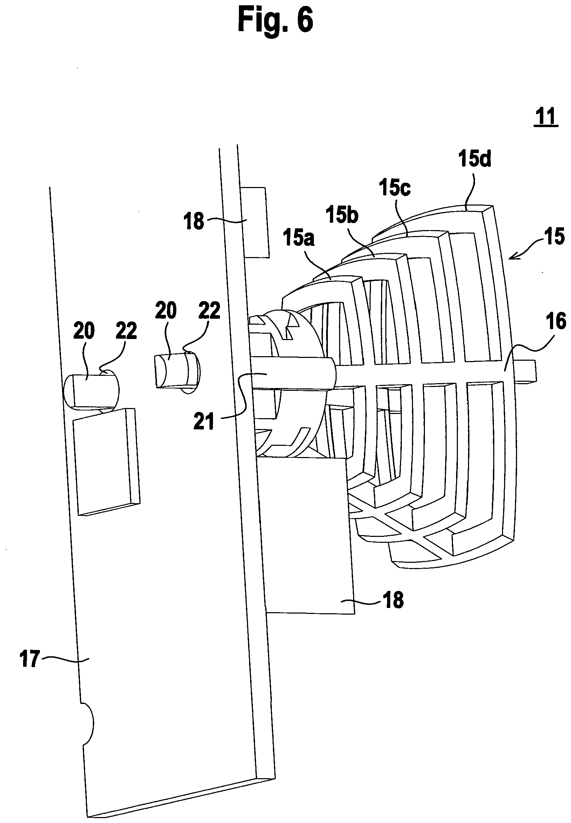

Die Figuren 5 und 6 zeigen den Blendentubus 11 gemäß den Figuren 3 und 4 nach Aufrasten auf eine Leiterplatte 17, die mit elektronischen Bauteilen 18 bestückt ist und Anschlussmittel 19 zum Anschluss an externe Einheiten aufweist.

Zur Befestigung an der Leiterplatte 17 weist der Blendentubus 11 Rastmittel auf, die von zwei Rasthaken 20 gebildet sind. Diese Rasthaken 20 sind an den freien Enden zweier seitlich an der gehäuseförmigen Kapselung 11a verlaufenden Leisten 21 angeordnet, die wie die Rasthaken 20 Bestandteil des Blendentubus 11 sind. Wie aus Figur 6 ersichtlich, werden die Rasthaken 20 in Bohrungen 22 der Leiterplatte 17 eingeführt und dort eingerastet, wodurch der Blendentubus 11 auf der Leiterplatte 17 lagefixiert wird. Mit dem Aufrasten des Blendentubus 11 auf der Leiterplatte 17 wird zugleich der in der Aufnahme des Blendentubus 11 gelagerte Sender 3 elektrisch mit der Leiterplatte 17 kontaktiert. An der Rückseite des Senders 3, die in der Öffnung 12 freiliegt, sind hierzu Anschlusselemente vorgesehen, die bei Aufrasten des Blendentubus 11 auf die Leiterplatte 17 auf entsprechende Anschlüsse der Leiterplatte 17 gedrückt werden.

### Bezugszeichenliste

- (1): Optischer Sensor
- (2): Sendelichtstrahlen
- (3): Sender
- (4): Sendeoptik
- (5): Empfangslichtstrahlen
- (6): Empfänger
- (7): Empfangsoptik
- (8): Auswerteeinheit
- (9): Gehäuse
- (9a): Gehäuse
- (9b): Gehäuse
- (10): Objekt
- (11): Blendentubus
- (11a): Kapselung
- (12): Öffnung
- (13): Blende
- (14): Halterung
- (15): Lichtfalle
- (15a): Lichtfallenelement
- (15b): Lichtfallenelement
- (15c): Lichtfallenelement
- (15d): Lichtfallenelement
- (16): Steg
- (17): Leiterplatte
- (18): Bauteile
- (19): Anschlussmittel
- (20): Rasthaken
- (21): Leiste
- (22): Bohrung

## Patentansprüche

1. Optischer Sensor zur Erfassung von Objekten in einem Überwachungsbereich, mit wenigstens einem Sendelichtstrahlen emittierenden Sender und wenigstens einem Empfangslichtstrahlen empfangenden Empfänger, wobei der Sender (3) und/oder Empfänger (6) jeweils in einem einstückig ausgebildeten Blendentubus (11) gelagert ist, wobei erste Teile des Blendentubus (11) eine Lichtfalle (15) bilden und weitere Teile zur Lagerung einer Optik und/oder zur Ausbildung einer Blende (13) vorgesehen sind, **dadurch gekennzeichnet, dass** der oder jeder Blendentubus (11) eine Aufnahme für den Sender (3) oder den Empfänger (6) aufweist, die eine am rückseitigen Ende des Blendentubus (11) ausmündende Öffnung (12) aufweist, wobei der Sender (3) oder Empfänger (6) in die Aufnahme eingerastet oder dort mittels Verdrängungsrippen fixiert wird, und dass eine Lichtfalle (15) das frontseitige Ende des Blendentubus (11) bildet, wobei die Lichtfalle (15) aus einer diskreten Anordnung von Lichtfallenelementen (15a-d) besteht, wobei diese koaxial zur Aufnahme für den Sender (3) oder Empfänger (6) angeordnet sind.

2. Optischer Sensor nach Anspruch 1, **dadurch gekennzeichnet, dass** dieser als Lichttaster, Reflexionslichtschranke oder als Lichtschranke ausgebildet ist, und dass dieser einen Sender (3) und einen Empfänger (6) aufweist, wobei der Sender (3) und Empfänger (6) jeweils in einem Blendentubus (11) integriert sind.

3. Optischer Sensor nach Anspruch 1, **dadurch gekennzeichnet, dass** dieser als Lichtgitter ausgebildet ist, und dass dieser eine Reihenanordnung von Sendern (3) und eine Reihenanordnung von Empfängern (6) aufweist, wobei alle Sender (3) und Empfänger (6) jeweils in einem Blendentubus (11) integriert sind.

4. Optischer Sensor nach einem der Ansprühe 1 bis 3, **dadurch gekennzeichnet, dass** der oder jeder Blendentubus (11) aus einem Kunststoff-Spritzgussteil besteht, welches mittels eines hinterschnittfreien Werkzeugs hergestellt ist.

5. Optischer Sensor nach einem der Ansprüche 1 bis 4, **dadurch gekennzeichnet, dass** bei in der Aufnahme eingesetztem Sender (3) oder Empfänger (6) dessen Anschlusselemente freiliegen, so dass diese an Anschlüssen einer Leiterplatte (17) kontaktiert werden.

6. Optischer Sensor nach Anspruch 5, **dadurch gekennzeichnet, dass** mit Kontaktieren des Senders (3) oder Empfängers (6) der Blendentubus (11) auf die Leiterplatte (17) aufgesetzt wird.

7. Optischer Sensor nach Anspruch 6, **dadurch gekennzeichnet, dass** der Blendentubus (11) Rastmittel zur Fixierung an der Leiterplatte (17) aufweist.

8. Optischer Sensor nach einem der Ansprüche 1 bis 5, **dadurch gekennzeichnet, dass** an die Aufnahme für den Sender (3) oder Empfänger (6) in Richtung des vorderen Endes des Blendentubus (11) eine Blende (13) und eine Aufnahme für eine von einer Linse gebildeten Optik anschließt, wobei diese koaxial zur Aufnahme für den Sender (3) oder Empfänger (6) angeordnet sind, wobei die Optik in der Aufnahme eingerastet oder dort mittels Verdrängungsrippen fixiert wird

9. Optischer Sensor nach einem der Ansprüche 1 bis 8, **dadurch gekennzeichnet, dass** jedes Lichtfallenelement (15a-d) aus einem Rahmen besteht, der in einer Ebene senkrecht zur optischen Achse des in der Aufnahme gelagerten Senders (3) oder Empfängers (6) orientiert ist.

10. Optischer Sensor nach Anspruch 9, **dadurch gekennzeichnet, dass** die Größen der Lichtfallenelemente (15a-d) in Richtung des frontseitigen Endes des Blendentubus (11) kontinuierlich zunehmen.

11. Optischer Sensor nach Anspruch 10, **dadurch gekennzeichnet, dass** die Lichtfallenelemente (15a-d) äquidistant zueinander angeordnet sind.

12. Optischer Sensor nach einem der Ansprüche 1 bis 11, **dadurch gekennzeichnet, dass** die Lichtfallenelemente (15a-d) über Stege (16) verbunden sind.

## Claims

1. Optical sensor for detecting objects in a monitoring region, comprising at least one transmitter emitting transmitted light beams and at least one receiver receiving received light beams, wherein the transmitter (3) and/or receiver (6) is or are mounted in a respective integrally formed aperture barrel (11), wherein first parts of the aperture barrel (11) form a light trap (15) and further parts are provided for mounting an optical system and/or for forming an aperture (13), **characterised in that** the or each aperture barrel (11) comprises a mount for the transmitter (3) or the receiver (6), which mount has an opening (12) open at the rear end of the aperture barrel (11), wherein the transmitter (3) or receiver (6) is detented in the mount or fixed there by means of displacement ribs and that a light trap (15) forms the front end of the aperture barrel (11), wherein the light trap (15) consists of a discrete arrangement of light trap elements (15a-d), and wherein these are arranged coaxially with respect to the mount for the transmitter (3) or receiver (6).

2. Optical sensor according to claim 1, **characterised in that** this is constructed as a light scanner, reflected light barrier or light barrier and that this comprises a transmitter (3) and a receiver (6), wherein the transmitter (3) and receiver (6) are each integrated in a respective aperture barrel (11).

3. Optical sensor according to claim 1, **characterised in that** this is constructed as a light grating and comprises a series of transmitters (3) and a series of receivers (6), wherein all transmitters (3) and receivers (6) are respectively integrated in an aperture barrel (11).

4. Optical sensor according to any one of claims 1 to 3, **characterised in that** the or each aperture barrel (11) consists of a plastics-material injection-moulded component produced by means of an undercut-free tool.

5. Optical sensor according to any one of claims 1 to 4, **characterised in that** when the transmitter (3) or receiver (6) is inserted in the mount the terminal elements of the transmitter or receiver are exposed so that contact therewith is made by terminals of a circuitboard (17).

6. Optical sensor according to claim 5, **characterised in that** with contact-making of the transmitter (3) or receiver (6) the aperture barrel (11) is placed on the circuitboard (17).

7. Optical sensor according to claim 6, **characterised in that** the aperture barrel (11) comprises detent means for fixing to the circuitboard (17).

8. Optical sensor according to any one of claims 1 to 5, **characterised in that** an aperture (13) and a mount for an optical system formed by a lens are connected with the mount for the transmitter (3) or receiver (6) in the direction of the front end of the aperture barrel (11) and are arranged coaxially with respect to the mount for the transmitter (3) or receiver (6), wherein the optical system is detented in the mount or fixed there by means of displacement ribs.

9. Optical sensor according to any one of claims 1 to 8, **characterised in that** each light trap element (15a-d) consists of a frame which is oriented in a plane perpendicular to the optical axis of the transmitter (3) or receiver (6) mounted in the mount.

10. Optical sensor according to claim 9, **characterised in that** the sizes of the light trap elements (15a-d) continually increase in the direction of the front end of the aperture barrel (11).

11. Optical sensor according to claim 10, **characterised in that** the light trap elements (15a-d) are arranged equidistantly from one another.

12. Optical sensor according to any one of claims 1 to 11, **characterised in that** the light trap elements (15a-d) are connected by way of webs (16).

## Revendications

1. Capteur optique pour la détection d'objets dans une zone de surveillance, comprenant au moins un émetteur émettant des rayons lumineux d'émission et au moins un récepteur recevant des rayons lumineux de réception, dans lequel l'émetteur (3) et/ou le récepteur (6) sont montés chacun dans un tube à diaphragme (11) réalisé d'une seule pièce, de premières parties du tube à diaphragme (11) formant un piège à lumière (15) et d'autres parties étant prévues pour y monter une optique et/ou pour former un diaphragme (13), **caractérisé en ce que** le ou chaque tube à diaphragme (11) présente un logement pour l'émetteur (3) ou le récepteur (6), qui présente une ouverture (12) qui débouche à l'extrémité arrière du tube à diaphragme (11), l'émetteur (3) ou le récepteur (6) étant encliqueté dans le logement ou y étant fixé au moyen de nervures à refoulement, et qu'un piège à lumière (15) forme l'extrémité avant du tube à diaphragme (11), le piège à lumière (15) étant constitué d'un arrangement discret d'éléments de piège à lumière (15ad), lesquels sont disposés coaxialement au logement pour l'émetteur (3) ou le récepteur (6).

2. Capteur optique selon la revendication 1, **caractérisé en ce que** celui-ci est réalisé sous la forme d'un détecteur photosensible, d'une barrière photoélectrique à réflexion ou d'une barrière lumineuse, et que celui-ci présente un émetteur (3) et un récepteur (6), l'émetteur (3) et le récepteur (6) étant chacun intégré dans un tube à diaphragme (11).

3. Capteur optique selon la revendication 1, **caractérisé en ce que** celui-ci est réalisé sous la forme d'une barrière lumineuse multifaisceaux, et que celui-ci présente une disposition en série d'émetteurs (3) et une disposition en série de récepteurs (6), chacun des émetteurs (3) et des récepteurs (6) étant intégré dans un tube à diaphragme (11).

4. Capteur optique selon l'une des revendications 1 à 3, **caractérisé en ce que** le ou chaque tube à diaphragme (11) est constitué d'une pièce en matière plastique moulée par injection qui est fabriquée au moyen d'un moule sans contre-dépouille.

5. Capteur optique selon l'une des revendications 1 à 4, **caractérisé en ce que** lorsque l'émetteur (3) ou le récepteur (6) est monté dans le logement, ses éléments de connexion sont exposés, de sorte que ceux-ci sont mis en contact avec des connexions d'une carte de circuit imprimé (17).

6. Capteur optique selon la revendication 5, **caractérisé en ce que** la mise en contact de l'émetteur (3) ou du récepteur (6) entraîne la pose du tube à diaphragme (11) sur la carte de circuit imprimé (17).

7. Capteur optique selon la revendication 6, **caractérisé en ce que** le tube à diaphragme (11) présente des moyens d'encliquetage pour la fixation sur la carte de circuit imprimé (17).

8. Capteur optique selon l'une des revendications 1 à 5, **caractérisé en ce que** qu'au logement pour l'émetteur (3) ou le récepteur (6) font suite en direction de l'extrémité avant du tube à diaphragme (11) un diaphragme (13) et un logement pour une optique formée par une lentille, lesquels sont disposés coaxialement au logement pour l'émetteur (3) ou le récepteur (6), l'optique étant encliquetée dans le logement ou y étant fixée au moyen de nervures à refoulement.

9. Capteur optique selon l'une des revendications 1 à 8, **caractérisé en ce que** chaque élément de piège à lumière (15a-d) est constitué d'un cadre qui est orienté dans un plan perpendiculaire à l'axe optique de l'émetteur (3) ou du récepteur (6) monté dans le logement.

10. Capteur optique selon la revendication 9, **caractérisé en ce que** la taille des éléments de piège à lumière (15a-d) augmente continuellement en direction de l'extrémité avant du tube à diaphragme (11).

11. Capteur optique selon la revendication 10, **caractérisé en ce que** les éléments de piège à lumière (15a-d) sont disposés à équidistance les uns des autres.

12. Capteur optique selon l'une des revendications 1 à 11, **caractérisé en ce que** les éléments de piège à lumière (15a-d) sont reliés par des entretoises (16).
